**Europäisches Patentamt**

**European Patent Office**

**Office européen des brevets**

(19)

(11) Veröffentlichungsnummer: **0 025 212**

**A1**

(12) # EUROPÄISCHE PATENTANMELDUNG

(21) Anmeldenummer: **80105248.1**

(22) Anmeldetag: **03.09.80**

(51) Int. Cl.³: **F 24 J 3/02**

(30) Priorität: **05.09.79 DE 2935900**

(43) Veröffentlichungstag der Anmeldung:
**18.03.81 Patentblatt 81/11**

(84) Benannte Vertragsstaaten:
**AT BE CH FR GB IT LI LU NL SE**

(71) Anmelder: **Kirchmayer, Hermann**
**Gabelsbergerstrasse 77**
**D-8000 München 2(DE)**

(72) Erfinder: **Kirchmayer, Hermann**
**Gabelsbergerstrasse 77**
**D-8000 München 2(DE)**

(74) Vertreter: **Patentanwälte Leinweber & Zimmermann**
**Rosental 7/II Aufg.**
**D-8000 München2(DE)**

(54) **Sonnenkollektor.**

(57) Der Sonnenkollektor für die Umsetzung von Sonnenenergie in Wärme besteht aus einer Mehrzahl von an der Außenseite eines Gebäudes oder dergleichen festlegbaren, miteinander kuppelbaren, an ein Wärmeträgerfluidnetz anschließbaren Kollektorelementen (1). Sie umfassen jeweils einen Wärmeabsorber (4, 5) mit einem Kanal (6), in dem ein Wärmeträgerfluid zirkuliert, und eine transparente Abdeckung, die zwei einen etwa rechten Winkel miteinander einschließende, geneigte Flächen umfaßt, die jeweils mit der Basis einen spitzen Winkel einschließen. Um einen rationellen einfachen Kollektoreinsatz auf einem Flachdach, eirem geneigten Dach oder aber an vertikalen Wänden zu ermöglichen, schließt die eine (7a) der beiden Flächen (7) mit der Basis einen steilen Winkel in der Größenordnung von ca. 60° und die andere (7b) einen flachen Winkel in der Größenordnung von ca. 30° ein. Jeder der beiden geneigten Flächen (7) ist ein eigener, die gleiche Neigung aufweisender Wärmeabsorber (4, 5) nebst Kanal (6) zugeordnet. Die Kanäle (6) der beiden Wärmeabsorber (4, 5) weisen voneinander unabhängige, je nach dem örtlichen Kollektoreinsatz an das Wärmeträgerfluidnetz anschließbare Zu- und Ableitungen (11, 12) auf.

./...

FIG. 1

0025212

**LEINWEBER &
ZIMMERMANN**

---

**PATENTANWÄLTE**

Dipl.-Ing. H. Leinweber (1930–76)
Dipl.-Ing. Heinz Zimmermann
Dipl.-Ing. A. Gf. v. Wengersky

Rosental 7 · D-8000 München 2
2. Aufgang (Kustermann-Passage)
Telefon (089) 2603989
Telex 528191 lepat d
Telegr.-Adr. Leinpat München

den   3. September 1980

Unser Zeichen zsdc

Hermann Kirchmayer

8000 München 2

Bundesrepublik Deutschland

---

Sonnenkollektor

Die Erfindung bezieht sich auf einen Sonnenkollektor für die Umsetzung von Sonnenenergie in Wärme, aus einer Mehrzahl von an der Außenseite eines Gebäudes oder dergleichen festlegbaren, miteinander kuppelbaren, an ein Wärmeträgerfluidnetz anschließbaren Kollektorelementen, die jeweils einen Wärmeabsorber mit einem Kanal, in dem ein Wärmeträgerfluid zirkuliert, und eine transparente Abdeckung umfassen, die zwei einen etwa rechten Winkel miteinander einschließende, geneigte Flächen umfaßt, die jeweils mit der Basis einen spitzen Winkel einschließen.

Bei einem für die Festlegung an vertikalen Bauwerksflächen bestimmten bekannten Sonnenkollektor dieser Art (DE-OS 27 11 442) sind die einzelnen Kollektorelemente im Bereich ihrer Basis als Wärmeabsorber mit einem durch eine durchgehende Kammer gebildeten, in montiertem Zustand horizontal verlaufenden Kanal ausgestaltet, dessen eines Ende die Zuleitung und dessen anderes Ende die Ableitung des Wärmeträgerfluids bildet und der mit dem entsprechenden, mit ihm fluchtenden Kanal des angrenzenden Kollektorelementes kuppelbar ist. Die jeweils breitere Abdeckungsfläche der Kollektorelemente schließt mit der Horizontalen einen Winkel von etwa 70° ein. Die Sonneneinstrahlung fällt deshalb bereits auf die Abdeckungsfläche, ganz besonders jedoch auf den Wärmeabsorber unter einem von einem rechten Winkel mehr oder minder stark abweichenden Winkel auf, so daß die Absorberfläche nicht optimal genutzt wird. Ein universeller Einsatz des Kollektorelementes, beispielsweise auf einer horizontalen Dachfläche, ist wegen der dann noch ungünstigeren Sonneneinstrahlungverhältnisse nicht vorgesehen.

Bei einem weiterhin bekannten Sonnenkollektor (DE-Gbm 78 29 911), bei dem die beiden, einen Winkel von etwa 90° miteinander einschließenden Flächen mit der Basis einen Winkel von etwa 45° einschließen, ist jeweils die eine auf die Einfallsrichtung der Sonneneinstrahlung bei hochstehender Sonne ausgerichtete Fläche mit einem Wärmeabsorber ausgestattet. Bei im Jahresdurchschnitt tieferem Sonnenstand weicht die Ausrichtung vom Optimalwert ab. Mit diesem Nachteil wird die Möglichkeit erkauft, den gleichen Sonnenkollektor praktisch unverändert auch an vertikalen Gebäudewänden zur Energiegewinnung festzulegen. Auch hierbei ergeben sich nicht die günstigsten Einstrahlungsbedingungen.

- 3 -

Die vorstehend mit ihrem Aufbau und mit ihrer Funktionsweise erläuterten herkömmlichen Sonnenkollektoren sind überdies beide mit dem Mangel behaftet, daß sie keine sinnvolle Montage an geneigten Flächen, beispielsweise schrägen Dachflächen zulassen.

Der Erfindung liegt die Aufgabe zugrunde, den Sonnenkollektor der eingangs genannten Art so weiter auszubilden, daß er universell einsetzbar ist, d.h. sowohl beispielsweise auf horizontalen Flächen als auch auf flach geneigten Flächen, ohne auf optimale Einstrahlungsverhältnisse verzichten zu müssen.

Der Sonnenkollektor nach der Erfindung, bei dem diese Aufgabe gelöst ist, zeichnet sich im wesentlichen dadurch aus, daß die eine der beiden Flächen mit der Basis einen steilen Winkel in der Größenordnung von ca. 60° und die andere einen flachen Winkel in der Größenordnung von ca. 30° einschließt und daß jeder der beiden geneigten Flächen ein eigener, die gleiche Neigung aufweisender Wärmeabsorber nebst Kanal zugeordnet ist und daß die Kanäle der beiden Wärmeabsorber voneinander unabhängige, je nach dem örtlichen Kollektoreinsatz an das Wärmeträgerfluidnetz anschließbare Zu- und Ableitungen aufweisen. Ein derartiger Sonnenkollektor läßt sich auf einem Flachdach so anordnen, daß die eine unter dem Winkel von ca. 60° geneigte Fläche der Sonne zugewandt und deshalb der optimalen Sonneneinstrahlung ausgesetzt ist. Derselbe Sonnenkollektor läßt sich jedoch auch auf mehr oder minder leicht geneigten Süddächern montieren, und zwar derart, daß sich der Winkel der flach geneigten Fläche dem Winkel von ca. 30° des Daches überlagert. Es ergibt sich auch dann für die Absorberfläche ein optimaler Einfallswinkel mit maximaler Energieumsetzung. Ein derartiger Sonnenkollektor ist aufgrund seiner vielseitigen Einsatzmöglich-

- 4 -

keiten ganz besonders für eine rationelle Massenproduktion
geeignet, die zu geringeren Fertigungskosten führt.

Als besonders günstig im Hinblick auf ein leicht zu
montierendes handliches Sonnenkollektorelement hat sich in
weiterer Ausgestaltung das Merkmal erwiesen, wonach jedes
Kollektorelement in aufeinander abwechselnder Folge mehrere,
zwei bis fünf oder mehr, vorzugsweise drei steil geneigte
Flächen und drei flach geneigte Flächen umfaßt und daß die
Zu- und Ableitungen der Kanäle der steil geneigten Flächen
ebenso wie die Zu- und Ableitungen der Kanäle der flach geneigten Flächen miteinander jeweils in Reihe oder parallel zueinander verbunden sind. Ein derartiges Kollektorelement zeichnet sich nämlich durch seine verhältnismäßig
flache Bauweise aus, ohne daß eine Verringerung der bestrahlten Netzfläche in Kauf genommen werden müßte.

Wird der Sonnenkollektor nach der Erfindung auf einem
geneigten Dach angebracht, dann besteht die Möglichkeit, daß
sich in den auf diese Weise entstehenden Rillen zwischen
den schmalen Flächen, die mit der Horizontalen einen nur kleinen Winkel einschließen, und der darüber befindlichen breiten,
der Sonneneinstrahlung optimal ausgesetzten Fläche Regenwasser
sammelt. Um einen einwandfreien Ablauf zu garantieren, hat
es sich in weiterer Ausgestaltung des Kollektorelementes
nach der Erfindung als sehr zweckmäßig herausgestellt, wenn
innerhalb jedes Kollektorelementes die Längskanten der Flächen
unter einem spitzen Winkel zur horizontalen Außenkante, die
vorzugsweise durch die Längskante des Kollektorelementes gebildet ist, verlaufen. Zweckmäßigerweise schließen dabei die
Längskanten der Flächen jeweils etwa in der Mitte jedesKollektorelementes eine Knickstelle und die so gebildeten Schenkel
miteinander einen stumpfen Winkel ein.

Ein einwandfreier Wasserablauf zu beiden Stirnseiten jedes Sonnenkollektorelementes hin wird sichergestellt, wenn die Flächen jeweils von der Mitte jedes Kollektorelementes eine Knickstelle aufweisen und die so gebildeten Schenkel miteinander einen stumpfen Winkel einschließen.

Weitere Einzelheiten, Vorteile und Merkmale der Erfindung ergeben sich aus der folgenden Beschreibung und der Zeichnung, auf die bezüglich aller nicht im Text beschriebenen Einzelheiten ausdrücklich verwiesen wird. Es zeigt:

Fig. 1  eine Schnittansicht eines Kollektorelementes,

Fig. 2  eine schematische Draufsicht zur Veranschaulichung des Verlaufes der Kanäle der verschiedenen Absorber, und

Fig. 3  eine schematische Draufsicht zur Veranschaulichung des abfallenden Verlaufes der Abdeckflächen jedes Kollektorelementes.

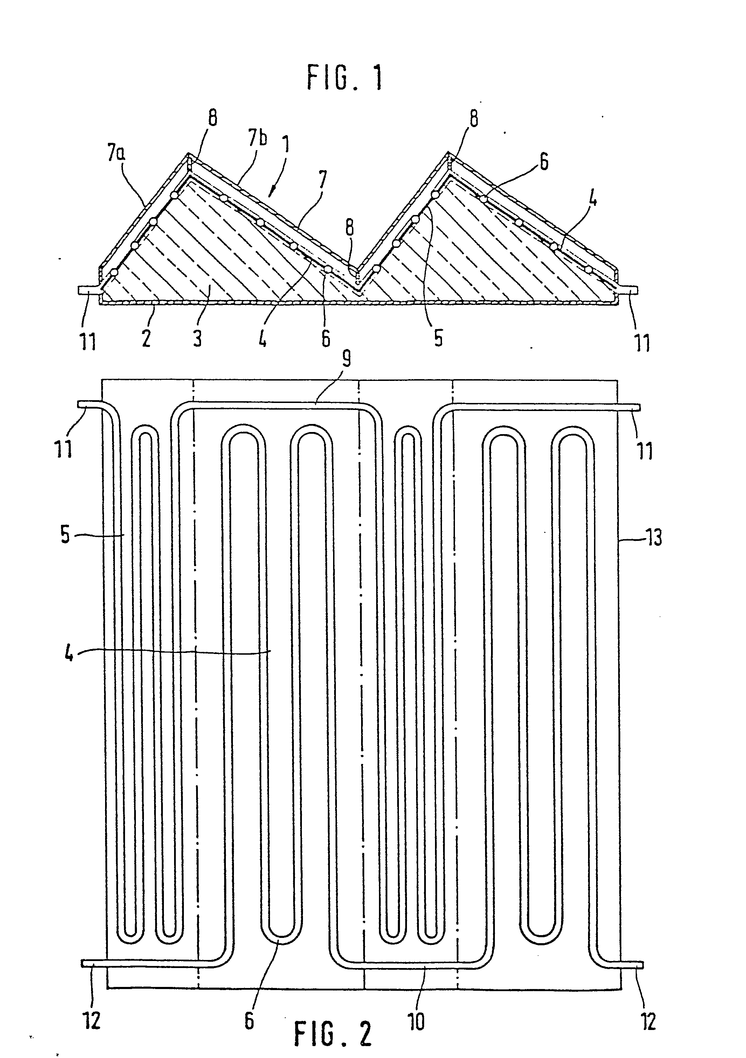

Wie aus der Zeichnung ersichtlich, besteht jedes Kollektorelement 1 aus einem korrosionsbeständigen Gehäuse 2, in dem auf einer hochwertigen Isolierung 3 Wärmeabsorber 4 und 5 mit jeweils einem Kanal 6 gelagert sind. Die Wärmeabsorber 4 und 5 können beispielsweise aus gut wärmeleitendem Aluminiumblech bestehen, und zwar wird zweckmäßigerweise in mindestens eines von zwei Aluminiumblechstreifen eine Nut eingeprägt, die nach dem Abdecken durch den anderen Blechstreifen den Kanal 6 bildet. Ein entsprechend größerer Kanalquerschnitt wird erzielt, wenn auch der zweite Blechstreifen mit einer auf die Nut des ersten Streifens abgestimmten Lage versehen ist. Im Abstand von den Wärmeabsorbern 4 und 5 ist eine transparente Abdeckung 7 aus witterungsbeständigem Material, beispielsweise Acrylglas festgelegt. Aus Fig. 1 geht hervor, daß die Abdeckung 7 in einzelne, jeweils einen etwa rechten Winkel miteinander einschließende geneigte Flächen 7a, 7b aufgegliedert ist, von denen die eine Fläche 7a mit der durch den Boden des Gehäuses 2 gebildeten Basis einen steilen Winkel in der Größenordnung von 60° und die andere einen flachen Winkel in der Größenordnung von etwa 30° einschließt. In gleicher Weise sind die Wärmeabsorber 4 und 5 unterhalb der Flächen 7a bzw. 7b der Abdeckung 7 in Bezug zur Basis geneigt. Die Kammern zwischen den Abdeckungsflächen und den Wärmeabsorbern sind durch Stege 8 voneinander getrennt, um eine Luftzirkulation zu den jeweils unbestrahlten, kälteren Kammern hin zu unterbinden. Statt Aluminium kann auch Kunststoff mit geeigneten Eigenschaften Verwendung finden.

In Fig.1 ist eine Ausführungsform mit zwei Paaren von nebeneinander angeordneten Wärmeabsorbern 4 und 5 sowie den Abdeckungsflächen 7a und 7b veranschaulicht. Auf diese Weise läßt sich die Höhe der Längskanten der Flächen 7a, 7b, d.h. deren Abstand von der Basis auch bei Wahl einer Kollektorelementbreite von ca. 1,50 m relativ klein halten. Eine weitere Verringerung der Höhe, die die Einsatzmöglichkeiten derartiger Kollektorelemente in ästhetischer Hinsicht, insbesondere bei ihrer Montage an geneigten Dachflächen begünstigt, ergibt sich bei weiterer Unterteilung, beispielsweise Anordnung von drei oder vier Paaren nebeneinander angeordneter Wärmeabsorber nebst Abdeckflächen.

Aus Fig. 2 geht hervor, daß die Kanäle 6 der den steilen Flächen 7 zugeordneten schmaleren Absorber 5 über eine am hinteren Ende des Kollektorelementes 1 vorgesehene Verbindungsleitung 9 verbunden sind. In entsprechender Weise ist am vorderen Ende des Kollektorelementes 1 eine Verbindungsleitung 10 vorgesehen, über die die Kanäle 6 der den flachgeneigten Abdeckungsflächen 7b zugeordneten Absorber 4 in Verbindung stehen. Die Kanäle 6 der Absorber 4 weisen Zu- und Ableitungen 11 auf, die Kanäle 6 der Absorber 5 entsprechende Zu- und Ableitungen 12. Über die Zu- und Ableitungen 11 bzw. 12 lassen sich die nebeneinander liegenden Kontaktelemente 1 miteinander kuppeln. Die Zu- und Ableitungen können statt seitlich auch abweichend von der Anordnung gemäß Fig. 2 zusätzlich zu dieser stirnseitig der Kontaktelemente 1 münden, um letztere in Reihe liegend miteinander zu verbinden.

Die beschriebenen Kontaktelemente 1 lassen sich entweder auf einer horizontalen Fläche, beispielsweise einem Flachdach auf nicht näher veranschaulichte Weise festlegen. In diesem Fall wird jeweils die steilere Fläche 7a und damit der schmalere Absorber 5 nach Süden zur Sonne hin ausgerichtet. Dann werden nur die Kanäle 6 der Absorber 5 an das Wärmeträgerfluidnetz angeschlossen. Bei Festlegung der Kontaktelemente 1 an in einem Bereich von etwa 30$^\circ$ geneigten Flächen, beispielsweise Süddächern, werden die Kontaktelemente 1 in um 180$^\circ$ verschwenkter Lage montiert; dann sind ihre breiteren Absorber 4 optimalen Einstrahlungsbedingungen ausgesetzt, und nur die Kanäle 6 dieser Absorber 4 werden an das Netz angeschlossen.

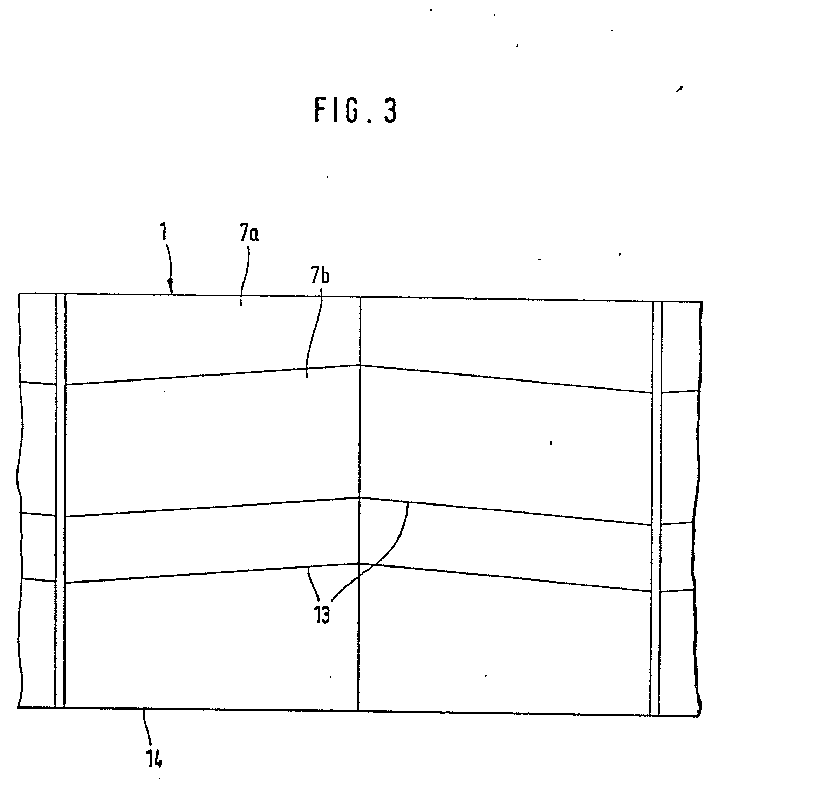

Die zuletzt erwähnte Montage an geneigten Flächen kann zu einem Ansammeln von Regenwasser in den Rinnen zwischen der unteren schmalen Fläche 7a und der sich nach oben anschließenden breiteren Fläche 7b führen. Um ein Abfließen des Regenwassers zu begünstigen, verlaufen bei der in Fig. 3 veranschaulichten Variante innerhalb jedes Kollektorelementes 1 die Längskanten 13 der Flächen 7a, 7b unter einem spitzen Winkel zur horizontalen Außenkante, die im Regelfall durch die Längskante 14 gebildet ist. Dabei ist es im Hinblick auf einen günstigen Anschluß aufeinanderfolgender Kontaktelemente 1 vorteilhaft, wenn gemäß Fig. 3 die Flächenlängskanten 13 jeweils in der Mitte jedes Kontaktelementes 1 eine Knickstelle aufweisen und wenn die so gebildeten Schenkel miteinander einen stumpfen Winkel einschließen.

Bei einer Montage an vertikalen Flächen, wie Hauswänden, werden die breiteren Flächen 7b mit einem Neigungswinkel von 60° angeordnet, während die schmaleren Flächen 7a nahezu senkrecht auf der Hauswand stehen bzw. nur geringfügig nach unten geneigt sind. Es ergibt sich so der ideale senkrechte Sonneneinfall insbesondere in der kritischen Übergangszeit im Frühjahr und im Herbst.

Die Kanäle sind so auf die Flächen 7a, 7b aufgebracht, daß sie kreuzungsfrei miteinander verbunden werden können, wie das die Figur zeigt. Zu- und Ableitungen der Kanäle einer Fläche liegen jeweils an der gleichen Schmalseite, von benachbarten Flächen an unterschiedlichen Schmalseiten der Flächen.

Patentansprüche :
--------------------------------

1. Sonnenkollektor für die Umsetzung von Sonnenenergie in Wärme, aus einer Mehrzahl von an der Außenseite eines Gebäudes oder dergleichen festlegbaren, miteinander kuppelbaren, an ein Wärmeträgerfluidnetz anschließbaren Kollektorelementen, die jeweils einen Wärmeabsorber mit einem Kanal, in dem ein Wärmeträgerfluid zirkuliert, und eine transparente Abdeckung umfassen, die zwei einen etwa rechten Winkel miteinander einschließende, geneigten Fläche umfaßt, die jeweils mit der Basis einen spitzen Winkel einschließen, dadurch gekennzeichnet, daß die eine (7a) der beiden Flächen (7) mit der Basis einen steilen Winkel in der Größenordnung von ca. 60° und die andere (7b) einen flachen Winkel in der Größenordnung von ca. 30° einschließt und daß jeder der beiden geneigten Flächen (7) ein eigener, die gleiche Neigung aufweisender Wärmeabsorber (4, 5) nebst Kanal (6) zugeordnet ist und daß die Kanäle (6) der beiden Wärmeabsorber (4, 5) voneinander unabhängige, je nach dem örtlichen Kollektoreinsatz an das Wärmeträgerfluidnetz anschließbare Zu- und Ableitungen (11, 12) aufweisen.

2. Sonnenkollektor nach Anspruch 1, dadurch gekennzeichnet, daß jedes Kollektorelement (1) in aufeinander abwechselnder Folge mehrere, vorzugsweise drei steil geneigte Flächen (7a) und drei flach geneigte Flächen (7b) umfaßt und daß die Zu- und Ableitungen (11, 12) der Kanäle (6) der steil geneigten Flächen (7a) ebenso wie die Zu- und Ableitungen der Kanäle der flach geneigten Flächen (7b) miteinander jeweils in Reihe oder parallel zueinander verbunden sind.

3. Sonnenkollektor nach einem der Ansprüche 1 oder 2, dadurch gekennzeichnet, daß innerhalb jedes Kollektorelementes (1) die Längskanten (13) der Flächen (7a, 7b) unter einem spitzen Winkel zur horizontalen Außenkante, die vorzugsweise durch die Längskante (14) des Kollektorelementes (1) gebildet ist, verlaufen.

4. Sonnenkollektor nach Anspruch 3, dadurch gekennzeichnet, daß die Längskanten (13) der Flächen jeweils etwa in der Mitte jedes Kollektorelementes (1) eine Knickstelle aufweisen und die so gebildeten Schenkel miteinander einen stumpfen Winkel einschließen.

FIG. 1

FIG. 2

Kirchmaver

# FIG. 3

Europäisches Patentamt

EUROPÄISCHER RECHERCHENBERICHT

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| A | DE - A1 - 2 537 316 (FELIX DÜRST AG ISOKORKWERK) <br> * Gesamt * <br><br> -- | 1,2 | F 24 J 3/02 |
| P | DE - A1 - 2 828 170 (RINGER) <br> * Fig.1,2; Seiten 5,6 * <br><br> -- | 1,2 | |
| | US - A - 4 120 282 (PATRICK) <br> * Fig.1,4; Spalte 3, Zeilen 42-66; Spalte 4, Zeilen 38-53 * <br><br> -- | 1,2 | |
| | US - A - 1 802 635 (EATON) <br> * Gesamt * <br><br> -- | 1,2 | RECHERCHIERTE SACHGEBIETE (Int. Cl.³) <br><br> F 24 J |
| D | DE - A1 - 2 711 442 (MÖLLER & BROCKHUES) <br> * Gesamt * <br><br> ---- | 1,2 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 20-11-1980 | SCHMIDT |

EPA form 1503.1 06.78